# EUROPEAN PATENT SPECIFICATION

(11) **EP 2 946 088 B1**
(45) Date of publication and mention of the grant of the patent: **21.11.2018**
(21) Application number: 13871803.6
(22) Date of filing: 15.01.2013
(51) Int. Cl.: F02C 7/22, F01D 25/14, F02C 7/25

(54) **FIRE SHIELD FOR A GAS TURBINE ENGINE**
FEUERFESTE ABSCHIRMUNG FÜR EINEN GASTURBINENMOTOR
ÉCRAN PARE-FEU DESTINÉ À UN MOTEUR À TURBINE À GAZ

(43) Date of publication of application: 25.11.2015
(73) Proprietor: United Technologies Corporation, Farmington, CT 06032 (US)
(72) Inventor: WONG, Chung, San Diego, CA 92104 (US); VITALE, Jack V., San Diego, CA 92126 (US); OSORIO, Omar I., San Diego, CA 92128 (US); CHEN, Daih-yeou, San Diego (US)
(74) Representative: Dehns
(86) International application number: PCT/US2013/021573
(87) International publication number: WO 2014/112976

(56) References cited:
- DE-A1-102007 061 994
- GB-A- 1 358 300
- US-A- 2 514 170
- US-A- 4 901 527
- US-A- 6 138 949
- US-A1- 2011 120 133
- US-A1- 2012 023 889
- US-A1- 2012 023 967
- US-B2- 6 604 286
- US-B2- 6 672 073

## Description

### BACKGROUND

The present disclosure relates to a gas turbine engine and, more particularly, to a fire shield therefor.

An auxiliary power unit (APU) is commonly installed in aircraft and vehicles to provide mechanical shaft power for electrical and hydraulic equipment such as electrical power generators, alternators and hydraulic pumps. Many aircraft are equipped with an APU to provide electrical and pneumatic power for such tasks as environmental control, lighting, powering electronics, main engine starting, etc.

Complying with fire zone requirements is usually accomplished by dedicating a fireproof zone for the APU installation in the aircraft. Alternatively, some aircraft manufacturers install the APU in the aircraft within a fireproof enclosure which may make the installation relatively complex and heavy, when compared with an airborne APU that is fully integrated with the aircraft. APU's are usually located in a tail section of the aircraft in which a combustor burn thru fire scenario does not pose a threat to the aircraft because adequate distance for the flames to dissipate is provided.

US 4901527 discloses a low turbulence flame holder mount. US 2012/0023967 A1 discloses an auxiliary power unit with hot section fire enclosure arrangement GB 1358300 discloses a fire wall and a burn-through protection system. DE 102007061994 A1 discloses a hot gas discharge cooling device.

### SUMMARY

A gas turbine engine according to one disclosed non-limiting embodiment of the present invention is claimed in claim 1.

In the alternative or additionally thereto, in the foregoing embodiment the fire shield includes a composite cloth on an interior of the sheet metal alloy layer with respect to the engine case. In the alternative or additionally thereto, in the foregoing embodiment the fire shield includes a composite cloth on an exterior of the sheet metal alloy layer with respect to the engine case. In the alternative or additionally thereto, in the foregoing embodiment the fire shield includes a composite cloth on an interior and an exterior of the sheet metal alloy layer with respect to the engine case.

In a further embodiment of any of the foregoing embodiments, the fire shield includes a composite cloth.

In a further embodiment of any of the foregoing embodiments, the fire shield extends approximately 90 degrees around the engine case.

In a further embodiment of any of the foregoing embodiments, the gas turbine engine is an Auxiliary Power Unit (APU).

A method of providing fire protection for an Auxiliary Power Unit (APU), according to another disclosed non-limiting embodiment of the present invention is claimed in claim 8.

In a further embodiment of the foregoing embodiment, the method further comprising locating the fire shield between the Auxiliary Power Unit (APU) and a compartment wall within an aircraft.

In a further embodiment of any of the foregoing embodiments, the method further comprising locating the fire shield between Auxiliary Power Unit (APU) and a compartment wall within a wing root of an aircraft.

In a further embodiment of any of the foregoing embodiments, the method further comprising spacing the fire shield from the combustor case of the Auxiliary Power Unit (APU).

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a schematic cross-section of an aircraft with an Auxiliary Power Unit (APU);
Figure 2 is a schematic partial cross-sectional view of a gas turbine engine disclosed herein as an Auxiliary Power Unit (APU);
Figure 3 is an expanded perspective view of a fire shield according to one disclosed non-limiting embodiment;
Figure 4 is an expanded end view of the fire shield;
Figure 5 is an expanded cross-sectional view of a fire shield according to one example useful for understanding the invention;
Figure 6 is an expanded cross-sectional view of a fire shield according to another example useful for understanding the invention; and
Figure 7 is an expanded cross-sectional view of a fire shield according to a disclosed non-limiting embodiment.

### DETAILED DESCRIPTION

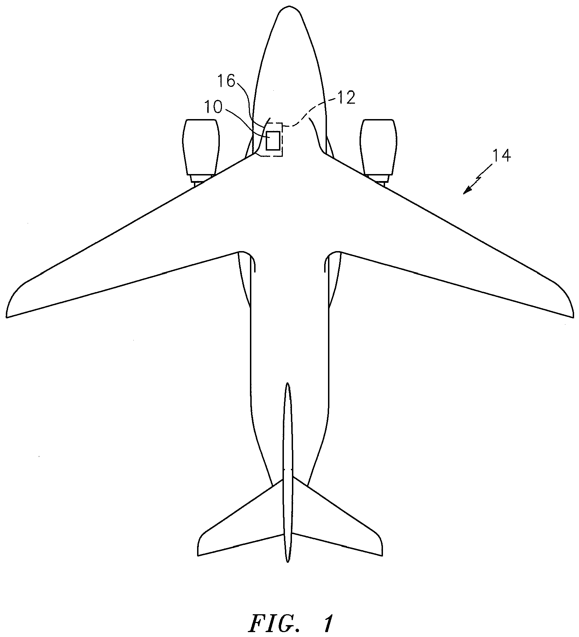

Figure 1 schematically illustrates a gas turbine engine 10 positioned in a compartment 12 of an aircraft 14. The compartment 12 may be a non-traditional location, e.g., non-tail location such as a wing root 16. The gas turbine engine 10 is disclosed herein as an Auxiliary Power Unit (APU), however various gas turbine engines such as a turboshaft may also benefit herefrom.

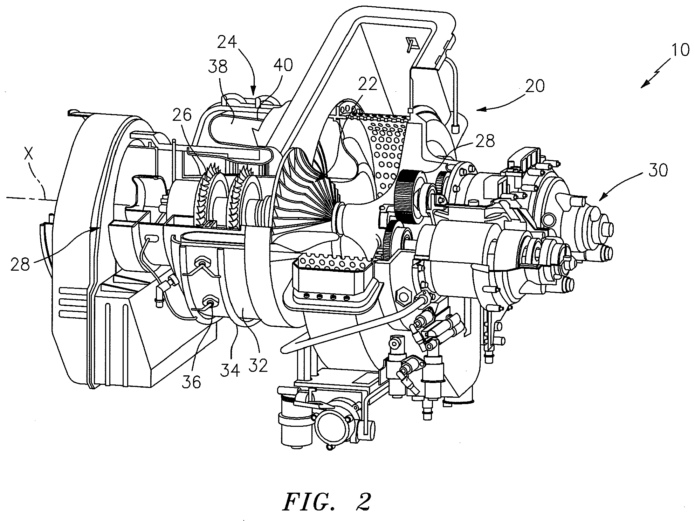

With reference to Figure 2, the gas turbine engine 10 generally includes an inlet section 20, a compressor section 22, a combustor section 24, a turbine section 26 and an exhaust section 28 circumferentially disposed about an engine centerline X. In operation, air is drawn through the inlet section 20, pressurized by the compressor section 22 then mixed with fuel and burned in the combustion section 24. The products of combustion that are expanded through the turbine section 26 above an idle fuel flow rate develop more power than needed to drive the compressor section 22 such that some air can be drawn off and used as a pneumatic output to power other devices. Alternatively, the power can be used to drive a load compressor that compresses air in a separate stage, drives other systems, or provides combinations thereof. Furthermore, the gas turbine engine 10 drives a gearbox 28 to rotate one or more generators 30 and provide electrical power.

The combustion section 24 generally includes a combustor case 32 that supports a fuel manifold 34 with multiple of fuel injectors 36 in communication with a combustor liner 38 contained within the combustor case 32. The combustor liner 38 establishes a combustion area 40 in which the multiple of fuel injectors 32 inject fuel for mixture with air. The multiple of fuel injectors 32 are located circumferentially around the combustor case 32.

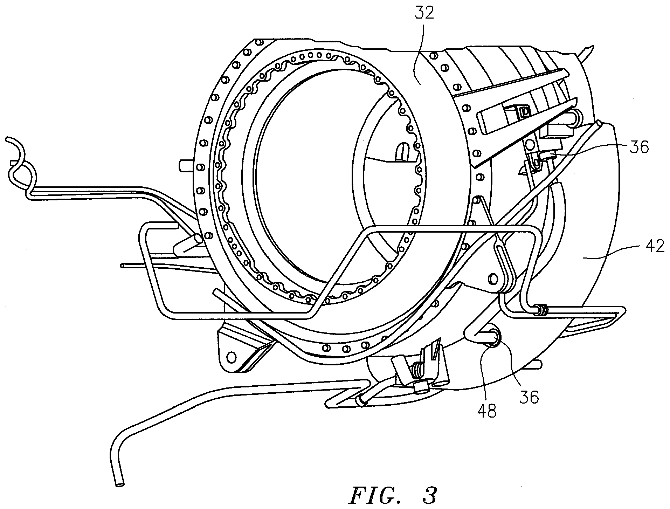

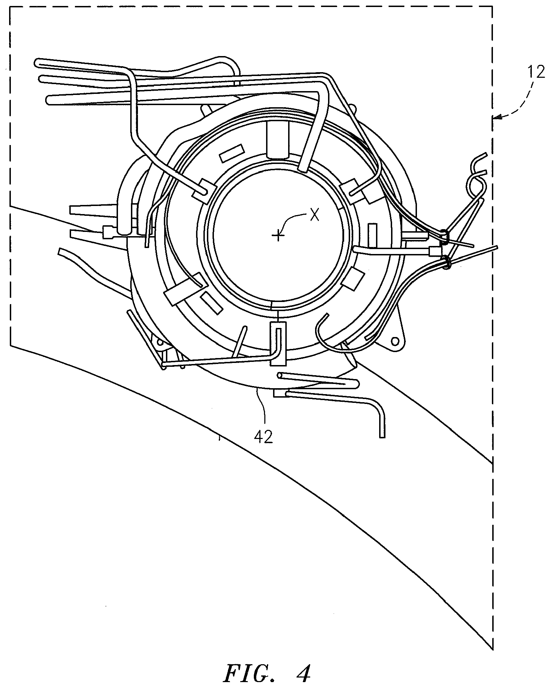

With reference to Figure 3, a fire shield 42 according to one disclosed non-limiting embodiment is mounted to the combustor case 32 to surround at least one, but less than all, of the multiple of fuel injectors 36. That is, the fire shield 42 extends only partially around the circumference of the combustor case 32 which in the disclosed non-limiting embodiment is approximately ninety (90) degrees. The fire shield 42 is located between the combustor case 32 and a wall of the compartment 12 (Figure 4). That is, the fire shield 42 is positioned to protect the wall which may be manufactured of a non-metallic material such as a composite material. It should be appreciated that other partial arcuate coverage may alternatively be provided.

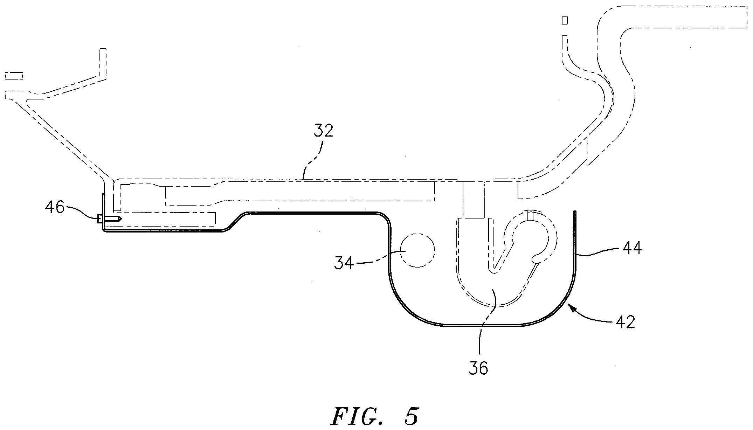

With reference to Figure 5, the fire shield 42 may be manufactured of, in this example useful for understanding the invention, a sheet metal alloy layer 44 to provide protection for a combustor burn-thru fire scenario should there be a puncture in the combustor liner 38 and the combustor case 32, as well as failures in the fuel injectors 32 which may result in an approximate 3000°F (1649°C) flame into the compartment 12.

The fire shield 42 may be mounted to the combustor case 32 with a multiple of fasteners 46 such as bolts. The fire shield 42 may, alternatively or additionally, be mounted to other cases as well as other static structure. Various access points 48 (Figure 3) which may be sealed or otherwise fire-proofed may also be provided.

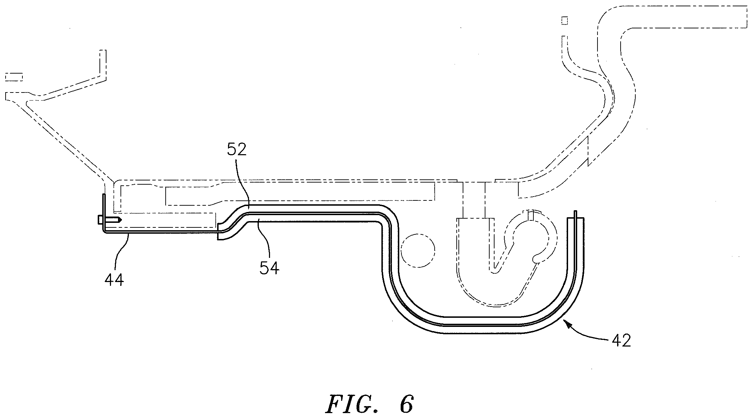

With reference to Figure 6, a fire shield 42, according to another example useful for understanding the invention, lines the sheet metal alloy 44 with an interior composite cloth layer 52 on an interior of the sheet metal alloy layer 44 and an external composite cloth layer 54 on an exterior of the sheet metal alloy layer 44 with respect to the combustor case 32.

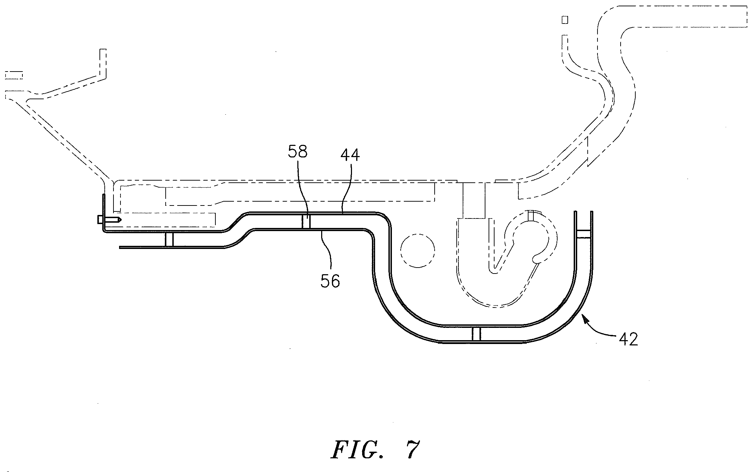

With reference to Figure 7, a fire shield 42 according to a disclosed non-limiting embodiment includes an exterior sheet metal alloy layer 56 spaced from the sheet metal alloy layer 44 by a multiple of stand-offs 58. The spaced arrangement provides further protection.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A gas turbine engine (10) comprising:
an engine case (32);
a multiple of fuel injectors (36) mounted to said engine case (32); and
a fire shield (42) mounted to said engine case (32) to surround at least one, but less than
all, of said multiple of fuel injectors (36);
said fire shield includes a sheet metal alloy layer (44); and
said fire shield includes an outer sheet metal alloy layer (56) mounted to and spaced away from said sheet metal alloy layer (44), **characterised in that**:
said engine case (32) is a combustor case.

2. The gas turbine engine as recited in claim 1, wherein said fire shield (42) includes a composite cloth (52) on an interior of said sheet metal alloy layer (44) with respect to said engine case (32).

3. The gas turbine engine as recited in claim 1, wherein said fire shield (42) includes a composite cloth (54) on an exterior of said sheet metal alloy layer (44) with respect to said engine case (32).

4. The gas turbine engine as recited in claim 1, wherein said fire shield (42) includes a composite cloth (52, 54) on an interior and an exterior of said sheet metal alloy layer (44) with respect to said engine case (32).

5. The gas turbine engine as recited in claim 1, wherein said fire shield (42) includes a composite cloth (52, 54).

6. The gas turbine engine as recited in any preceding claim, wherein said fire shield (42) extends approximately 90 degrees around said engine case (32).

7. The gas turbine engine as recited in any preceding claim, wherein said gas turbine engine (10) is an Auxiliary Power Unit (APU).

8. A method of providing fire protection for an Auxiliary Power Unit (APU) comprising:
locating a fire shield (42) to surround at least one, but less than all, of a multiple of fuel injectors (36);
mounting an outer sheet metal alloy layer (56) of said fire shield (42) to a sheet metal alloy layer (44) of said fire shield (42), wherein said outer sheet metal alloy layer (56) is spaced away from said sheet metal alloy layer (44); and
mounting the fire shield (42) to a combustor case (32) of the Auxiliary Power Unit (APU).

9. The method as recited in claim 8, further comprising locating the fire shield (42) between the Auxiliary Power Unit (APU) and a compartment wall within an aircraft (14).

10. The method as recited in claim 8, further comprising locating the fire shield (42) between Auxiliary Power Unit (APU) and a compartment wall within a wing root of an aircraft (14).

11. The method as recited in claim 8, further comprising spacing the fire shield (42) from the combustor case (32) of the Auxiliary Power Unit (APU).

## Patentansprüche

1. Gasturbinenmotor (10), umfassend:
ein Motorgehäuse (32);
eine Vielzahl von Brennstoffeinspritzern (36), die an dem Motorgehäuse (32) befestigt sind; und
eine feuerfeste Abschirmung (42), die an dem Motorgehäuse (32) befestigt ist, um mindestens einen, aber weniger als alle aus der Vielzahl von Brennstoffeinspritzern (36) zu umgeben;
wobei die feuerfeste Abschirmung eine Blechlegierungsschicht (44) umfasst; und
die feuerfeste Abschirmung eine äußere Blechlegierungsschicht (56) umfasst, die an der Blechlegierungsschicht (44) befestigt und von dieser beabstandet ist, **dadurch gekennzeichnet, dass**:
das Motorgehäuse (32) ein Brennkammergehäuse ist.

2. Gasturbinenmotor nach Anspruch 1, wobei die feuerfeste Abschirmung (42) ein Verbundgewebe (52) an einer Innenseite der Blechlegierungsschicht (44) in Bezug auf das Motorgehäuse (32) umfasst.

3. Gasturbinenmotor nach Anspruch 1, wobei die feuerfeste Abschirmung (42) ein Verbundgewebe (54) an einer Außenseite der Blechlegierungsschicht (44) in Bezug auf das Motorgehäuse (32) umfasst.

4. Gasturbinenmotor nach Anspruch 1, wobei die feuerfeste Abschirmung (42) ein Verbundgewebe (52, 54) an einer Innenseite und an einer Außenseite der Blechlegierungsschicht (44) in Bezug auf das Motorgehäuse (32) umfasst.

5. Gasturbinenmotor nach Anspruch 1, wobei die feuerfeste Abschirmung (42) ein Verbundgewebe (52, 54) umfasst.

6. Gasturbinenmotor nach einem der vorstehenden Ansprüche, wobei die feuerfeste Abschirmung (42) sich etwa 90 Grad um das Motorgehäuse (32) erstreckt.

7. Gasturbinenmotor nach einem der vorstehenden Ansprüche, wobei der Gasturbinenmotor (10) ein Hilfstriebwerk (APU) ist.

8. Verfahren zum Bereitstellen eines Brandschutzes für ein Hilfstriebwerk (APU), umfassend:
Anordnen einer feuerfesten Abschirmung (42), so dass sie mindestens einen, aber weniger als alle aus einer Vielzahl von Brennstoffeinspritzern (36) umgibt;
Befestigen einer äußeren Blechlegierungsschicht (56) der feuerfesten Abschirmung (42) an einer Blechlegierungsschicht (44) der feuerfesten Abschirmung (42), wobei die äußere Blechlegierungsschicht (56) von der Blechlegierungsschicht (44) beabstandet ist; und
Befestigen der feuerfesten Abschirmung (42) an einem Brennkammergehäuse (32) des Hilfstriebwerks (APU).

9. Verfahren nach Anspruch 8, weiter umfassend das Anordnen der feuerfesten Abschirmung (42) zwischen dem Hilfstriebwerk (APU) und einer Brandwand innerhalb eines Luftfahrzeugs (14).

10. Verfahren nach Anspruch 8, weiter umfassend das Anordnen der feuerfesten Abschirmung (42) zwischen dem Hilfstriebwerk (APU) and einer Brandwand innerhalb einer Tragflächenwurzel eines Luftfahrzeugs (14).

11. Verfahren nach Anspruch 8, weiter umfassend das Beabstanden der feuerfesten Abschirmung (42) vom Brennkammergehäuse (32) des Hilfstriebwerks (APU).

## Revendications

1. Moteur à turbine à gaz (10) comprenant :
un boîtier de moteur (32) :
de multiples injecteurs de carburant (36) montés sur ledit boîtier de moteur (32) ; et
un écran pare-feu (42) monté sur ledit boîtier de moteur (32) pour entourer au moins un, mais pas la totalité, desdits multiples injecteurs de carburant (36) ;
ledit écran pare-feu inclut une couche de tôle d'alliage métallique (44) ; et
ledit écran pare-feu inclut une couche de tôle d'alliage métallique externe (56) montée sur et à l'écart de ladite couche de tôle d'alliage métallique (44), **caractérisé en ce que** :
ledit boîtier de moteur (32) est un boîtier de dispositif combustor.

2. Moteur à turbine à gaz selon la revendication 1, dans lequel ledit écran pare-feu (42) inclut un tissu composite (52) sur un intérieur de ladite couche de tôle d'alliage métallique (44) par rapport audit boîtier de moteur (32).

3. Moteur à turbine à gaz selon la revendication 1, dans lequel ledit écran pare-feu (42) inclut un tissu composite (54) sur un extérieur de ladite couche de tôle d'alliage métallique (44) par rapport audit boîtier de moteur (32).

4. Moteur à turbine à gaz selon la revendication 1, dans lequel ledit écran pare-feu (42) inclut un tissu composite (52, 54) sur un intérieur et un extérieur de ladite couche de tôle d'alliage métallique (44) par rapport audit boîtier de moteur (32) .

5. Moteur à turbine à gaz selon la revendication 1, dans lequel ledit écran pare-feu (42) inclut un tissu composite (52, 54) .

6. Moteur à turbine à gaz selon une quelconque revendication précédente, dans lequel ledit écran pare-feu (42) s'étend approximativement de 90 degrés autour dudit boîtier de moteur (32) .

7. Moteur à turbine à gaz selon une quelconque revendication précédente, dans lequel ledit moteur à turbine à gaz (10) est un groupe auxiliaire de puissance (APU).

8. Procédé de fourniture d'une protection contre le feu pour un groupe auxiliaire de puissance (APU) comprenant :
le positionnement d'un écran pare-feu (42) pour entourer au moins l'un, mais pas la totalité, de multiples injecteurs de carburant (36) ;
le montage d'une couche de tôle d'alliage métallique externe (56) dudit écran pare-feu (42) sur une couche de tôle d'alliage métallique (44) dudit écran pare-feu (42), dans lequel ladite couche de tôle d'alliage métallique externe (56) est à l'écart de ladite couche de tôle d'alliage métallique (44) ; et
le montage de l'écran pare-feu (42) sur un boîtier de dispositif combustor (32) du groupe auxiliaire de puissance (APU).

9. Procédé selon la revendication 8, comprenant en outre la positionnement de l'écran pare-feu (42) entre le groupe auxiliaire de puissance (APU) et une paroi de compartiment à l'intérieur d'un aéronef (14).

10. Procédé selon la revendication 8, comprenant en outre le positionnement de l'écran pare-feu (42) entre un groupe auxiliaire de puissance (APU) et une paroi de compartiment à l'intérieur d'un encastrement d'un aéronef (14).

11. Procédé selon la revendication 8, comprenant en outre l'écartement de l'écran pare-feu (42) du boîtier de dispositif combustor (32) du groupe auxiliaire de puissance (APU).
